# EUROPÄISCHE PATENTSCHRIFT

(11) **EP 1 191 665 B1**
(45) Veröffentlichungstag und Bekanntmachung des Hinweises auf die Patenterteilung: **12.10.2005**
(21) Anmeldenummer: 01120544.0
(22) Anmeldetag: 29.08.2001
(51) Int. Cl.: H02K 3/38, H02K 3/50

(54) **Stator für Elektromotoren, insbesondere für Asynchronmotoren**
Stator for an electric motor, especially for an asynchron motor
Stator pour moteur électrique, particulièrement pour moteur asynchrone

(30) Priorität: 14.09.2000 DE 10045471
(43) Veröffentlichungstag der Anmeldung: 27.03.2002
(73) Patentinhaber: Miele & Cie. KG, 33332 Gütersloh (DE)
(72) Erfinder: Kurth, Rolf, 53894 Mechernich (DE); Mayer, Günter, 53902 Bad Münstereifel (DE); Nöthen, Thomas, 53925 Kall (DE); Rode, Peter, Dr., 53881 Euskirchen (DE)

(56) Entgegenhaltungen:
- EP-A- 0 993 095
- US-A- 5 717 273
- PATENT ABSTRACTS OF JAPAN vol. 1998, no. 04, 31. März 1998 (1998-03-31) -& JP 09 322459 A (HITACHI LTD), 12. Dezember 1997 (1997-12-12)
- PATENT ABSTRACTS OF JAPAN vol. 018, no. 595 (E-1630), 14. November 1994 (1994-11-14) -& JP 06 225491 A (MITSUBISHI ELECTRIC CORP), 12. August 1994 (1994-08-12)
- PATENT ABSTRACTS OF JAPAN vol. 2000, no. 08, 6. Oktober 2000 (2000-10-06) -& JP 2000 134850 A (TAMAGAWA SEIKI CO LTD), 12. Mai 2000 (2000-05-12)

## Beschreibung

Die Erfindung betrifft einen Stator für Elektromotoren, insbesondere für Asynchronmotoren, bei dem eine aus mehreren Wicklungssträngen bestehende Statorwicklung in die Statornuten eines Statorkernes eingezogen ist, und bei dem die nutverlassenden Drahtanfänge und -enden der Wicklungsstränge direkt über einen am Stator angeordneten Verschaltungsträger an mindestens eine am Statorkern befestigte Kontaktiereinrichtung geführt und mit dieser verbunden sind, wobei der Verschaltungsträger eine auf dem Statorkern angeordnete, im wesentlichen kreisförmige Verlegeplatte mit Umlenkelementen oder Führungselementen beinhaltet.

Ein Stator dieser Art ist aus der US-A-5 717 273 bekannt. Dort ist auf der Stirnfläche des Statorblechpakets ein als Endkappe bezeichneter, Verschaltungsträger angeordnet, über den die zu verschiedenen Bündeln (set of coils) zusammengefassten Drahtanfänge und -enden zu Kontaktiereinrichtungen (connection terminals) geführt werden.

Im Gegensatz zu Universalmotoren (s. DE 86 03 981 U1), bei denen eine Verlegung der Feldwicklung direkt am Stator erfolgt; wird bei Asynchronmotoren ein Spuleneinziehwerkzeug benutzt und vorgefertigte Spulen zunächst in einen lamellierten hülsenförmigen Körper verlegt. Der Statorkern wird dann derartig zu den Lamellen ausgerichtet, dass diese jeweils mit ihren inneren Enden mit der Bezahnung des Statorkernes in Eingriff stehen. Darauf werden die Spulen in die Statornuten gezogen. Als Folge dieses Einziehverfahrens befinden sich die Drahtanfänge und die Drahtenden der Spulen, im Folgenden Anschlussenden genannt, mehr oder weniger ungeordnet an einem der beiden Wickelköpfe des Ständerpaketes. Die Anschlussenden verlassen die Statornuten je nach Spulenlage im Bereich des Nutgrundes, der Nutmitte oder der Nutöffnung. Zur Herstellung der externen elektrischen Verbindung über einen Anschlussstecker ist es bekannt, die Anschlussdrähte zum Stecker mit einer Litze zu verbinden, an deren Ende eine Flachsteckzunge angeschlagen ist. Die Verbindung der Litze mit dem Anschlussdrahtende erfolgt durch Crimpen. Dabei wird die Crimpverbindung mit einem Schlauch isoliert, in den Wickelkopf verlegt und angebunden. Die internen Spulenverbindungen (Sternpunkt, Thermoschalter) werden gecrimpt, isoliert und im Wickelkopf verstaut oder an den Wickelkopf gebunden. Die mit Flachsteckern versehenen Litzen werden in ein Steckergehäuse gesteckt oder lose als Anschlusskabel nach außen geführt. Die vorbeschriebene Wicklungsverschaltung ist sehr aufwendig und arbeitsintensiv.

Bei Pumpenmotoren von Heizungsanlagen sind auch litzenlose Anschlusstechniken bekannt. Dabei werden die Anschlussenden der Spulen über den Wickelkopf zu der Kontaktiereinrichtung, beispielsweise einem Steckergehäuse, gezogen. Dabei können Kreuzungen von Spulendrähten mit unterschiedlichen Phasen nicht vermieden werden. Bei mehrphasigen Motoren können so Phasenschlüsse zwischen den einzelnen Wicklungssträngen entstehen.

Aus der US 3 984 712 ist ein Elektromotor bekannt, bei dem die Anschlussenden in ein Gehäuse (annular member 19) geführt sind, welches den Wickelkopf umgibt und mit Kontaktstellen (connector 27) auf der kreisringförmigen Oberseite des Gehäuses verbunden sind. Die Verschaltung erfolgt über eine kreisringförmige Kontaktplatte (second annular member 31) mit Leiterbahnen und einem an Kabeln angeschlossenen Stecker. Die zusätzlichen Kontaktstellen am Gehäuse können durch Ermüdung und Erhöhung der Übergangswiderstände zu Problemen führen.

Aus der JP 09 322459 A ist ein Stator bekannt, bei dem die Anschlussenden an einen ringförmigen Verbindungsstreifen geführt und befestigt werden.

Aus der JP 06225491 A ist ein Stator bekannt, dessen Anschlussenden über eine auf den Wickelkopf aufgelegte Endplatte geführt sind.

Die EP 0 993 095 A1 zeigt ebenfalls einen Motor, bei dem auf den Wickelkopf eine Verschaltungsanordnung aufgelegt ist. Hier beinhaltet die Verschaltungsanordnung mehrere Kontaktiereinrichtungen (Mehrfach-Kontaktkammern).

Die JP 2000 134850 A zeigt einen Stator mit einer am Statorblechpaket fixierten Kontaktiereinrichtung.

Der Erfindung stellt sich das Problem, einen Elektromotor der eingangs genannten Art derart weiterzuentwickeln, dass eine einfache, phasengetrennte Verlegung der Anschlussenden zu einer Kontaktiereinrichtung möglich ist.

Erfindungsgemäß wird dieses Problem dadurch gelöst, dass alle Anschlussenden die Statornuten am Nutgrund verlassen, und dass die Umlenkelemente oder Führungselemente als Haken oder als zwischen zwei Haken angeordnete Stege ausgebildet sind, und daß der Verschaltungsträger zur berührungsfreien Führung der Anschlussenden zu der (den) Kontaktiereinrichtung(en) ausgebildet ist. Vorteilhafte Ausgestaltungen und Weiterbildungen der Erfindung ergeben sich aus den nachfolgenden Unteransprüchen.

Die mit der Erfindung erreichbaren Vorteile bestehen in der Schaffung einer Möglichkeit zur einfachen, geordneten und phasengetrennten Verlegung der Anschlussenden zu einer oder mehreren Kontaktiereinrichtungen. Die Verlegung ist dann leicht entweder manuell durchführbar oder durch die geordnete, positionsgenaue Lage der Anschlussenden auch mit vertretbarem Aufwand automatisierbar.

Es ist außerdem vorteilhaft, wenn die Umlenkelemente als aus der Verlegeplatte herausragende Haken ausgebildet sind, welche eine konzentrische Verlegung der Anschlussenden ermöglichen. Die Drähte liegen dann platzsparend in einer einzigen Ebene.

Darüber hinaus ist es vorteilhaft, wenn Haken zur Halterung der inneren Anschlussenden höher als Haken zur Halterung der äußeren Anschlussenden ausgebildet sind. Hierdurch wird die Verlegung der Drähte zu der(den) Kontaktiereinrichtungen vereinfacht, da sie in unterschiedlichen Höhenlagen an die Haken herangeführt werden können und so selbsttätig durch den richtigen Haken ergriffen werden. Dies ermöglicht eine automatische Verlegung der Anschlussenden durch einen Roboter.

Die Haken sind vorteilhafterweise in radialer Richtung derart hinter den Statornuten angeordnet, dass die Nutzwischenräume freiliegend sind. Hierdurch wird nach dem Einziehen der Statorwicklung ein automatisches Vernähen des Wickelkopfes dadurch vereinfacht, dass große Zwischenräume zum Durchführen einer Nadel geschaffen werden.

In einer vorteilhaften Ausführungsform sind an der Verlegeplatte Kontaktkammern angeformt, die zu mindestens einem Steckbereich zusammengefasst sind. Hierdurch wird die Montage durch Schaffung von Baugruppen vereinfacht. Durch Ausbildung eines ersten Steckbereichs als Steckersockel zur Herstellung des externen Motorstromanschlusses kann ein gemeinsamer Anschlussstecker verwendet werden. Bei der Verwendung von zwei Steckerbereichen, von denen der erste zur Herstellung des externen Motorstromanschlusses und der zweite zur Herstellung der internen elektrischen Verbindungen der einzelnen Wicklungsstränge dient, wird eine einfache und übersichtliche Verlegung der Anschlussenden bis zu diesen Bereichen ermöglicht. Dies ist insbesondere der Fall, wenn die beiden Steckerbereiche gegenüberliegend auf der Verlegeplatte angeordnet sind.

Es ist auch vorteilhaft, wenn die Steckbereiche sich am Umfang des Statorkernes abstützen, wobei sich die Kontaktkammern in axialer, radialer oder tangentialer Richtung erstrecken können. Dabei sollte der obere Rand der Steckbereiche unterhalb oder in der Grundfläche der Verlegeplatte liegen. Dann ist der Wickelkopf nach dem Verschalten der Anschlussdrähte frei zugänglich für weitere automatisierte Arbeitsschritte wie Nähen, Bandagieren, Formen und Verbacken.

In einer weiteren vorteilhaften Ausführungsform des Elektromotors beinhaltet der Verschaltungsträger an die Verlegeplatte angeformte weitere Umlenk- und Führungselemente, welche am Umfang des Statorkernes anliegen. Diese ermöglichen eine lagerichtige und berührungsfreie Verlegung der Anschlussdrähte bis in die Steckbereiche.

Es ist auch vorteilhaft, wenn der Verschaltungsträger an die Verlegeplatte angeformte Halteelemente für Elektro-Bauelemente beinhaltet. Hierdurch wird die Funktionalität der Verlegeplatte erhöht.

Wenn der Verschaltungsträger an die Verlegeplatte angeformte Verleghilfen zur vorübergehenden Aufnahme der Anschlussenden beinhaltet, kann an diesen Verleghilfen eine Übergabe der Anschlussenden an einen Roboter zur automatischen Verlegung bis in die Steckbereiche erfolgen.

Durch die Anformung von Isolierungen der Statornuten und/oder Fixierhilfen zum lagerichtigen Einsatz des Motors in eine Motorhalterung an der Verlegeplatte wird deren Funktionalität erweitert und die Montage des Motors noch mehr vereinfacht.

Die elektrische Verbindung zwischen den Anschlussdrähten und der Kontaktiereinrichtung kann in einfacher Weise automatisiert durch Schneid-Klemmtechnik vorgenommen werden.

Ein Ausführungsbeispiel der Erfindung ist in den Zeichnungen rein schematisch dargestellt und wird nachfolgend näher beschrieben. Es zeigt
- Figur 1a,b: den Stator eines Asynchronmotors mit Verschaltungsträger in perspektivischer Darstellung in unterschiedlichen Fertigungsstufen;
- Figur 1c,d: Ausschnitte aus Figur 1a im Bereich des externen Motoranschlusses mit und ohne Steckerrahmen in verschiedenen Perspektiven;
- Figur 1e,f: den Verschaltungsträger des Stators nach Figur 1a in perspektivischer Darstellung und in der Draufsicht;
- Figur 2a: ein anderes Ausführungsbeispiel eines Stators mit Verschaltungsträger in perspektivischer Darstellung;
- Figur 2b,c: Ausschnitte aus Figur 2a im Bereich der internen Spulenverbindung in verschiedenen Perspektiven;
- Figur 2d: einen Ausschnitt aus Figur 2a im Bereich eines Umlenk- und Führungselementes;
- Figur 2e: einen Ausschnitt aus Figur 2a im Bereich des externen Motoranschlusses mit aufgesetztem Steckerrahmen;
- Figur 3: den Verschaltungsträger eines weiteren Ausführungsbeispiels.

In den Figuren sind identische Bauteile mit gleichen Bezugszeichen versehen.

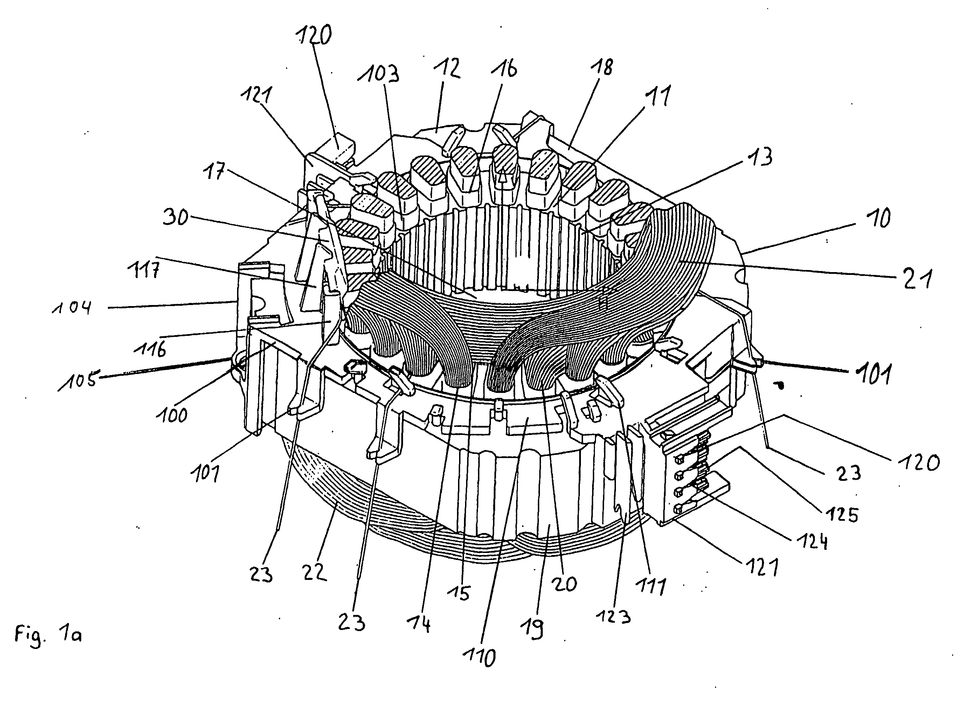

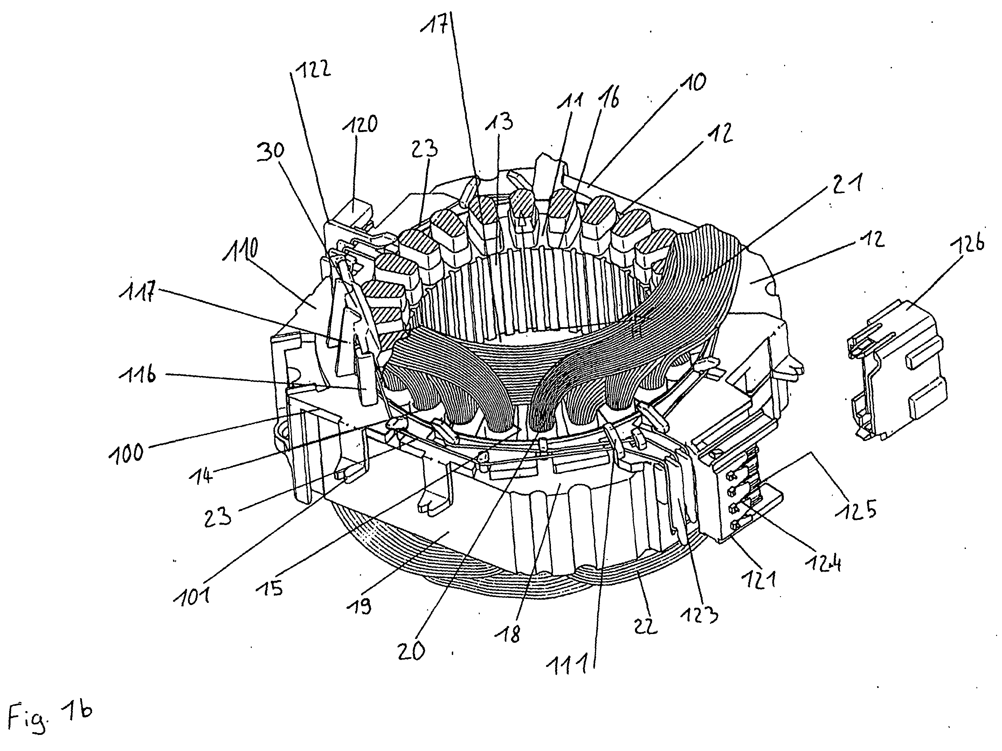

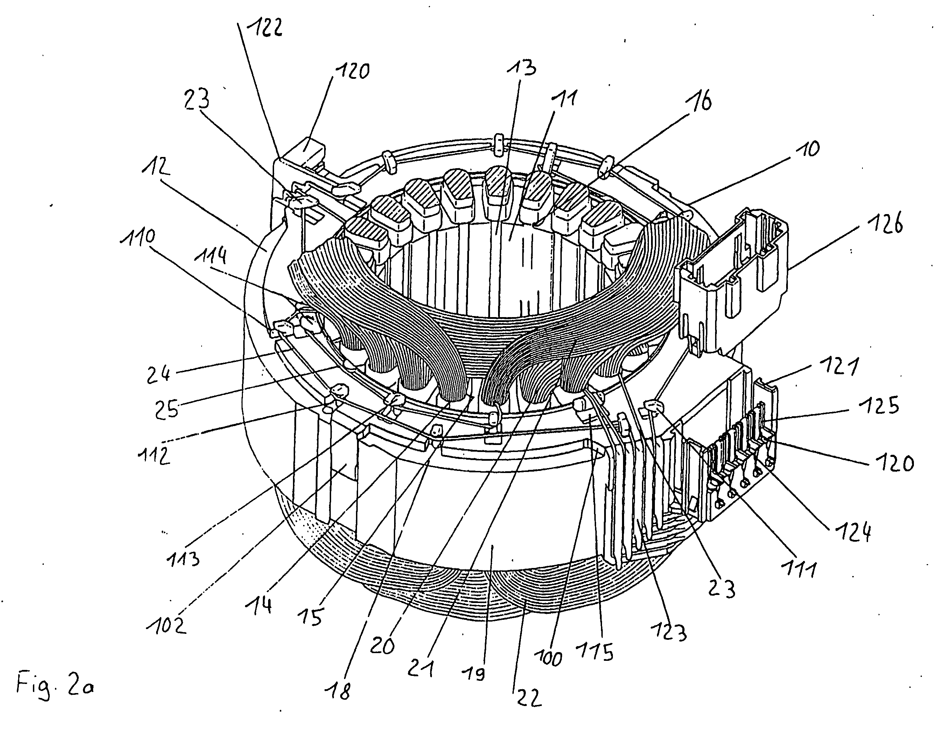

Die Figuren 1a, 1b und 2a zeigen jeweils den Stator von verschiedenen Ausführungsbeispielen eines Asynchronmotors. Er besitzt einen Statorkern (10) aus geschichteten Blechstanzteilen. Dabei erstrecken sich Zähne (11) vom Joch (12) aus nach innen und begrenzen zwischen sich Statornuten (13). Die inneren Enden der Zähne (11) begrenzen eine Bohrung (17), die parallel zu den Statornuten (13) ausgerichtet ist und den nicht dargestellten Rotor aufnimmt.

In die Statornuten (13) sind Wicklungsstränge (20) eingezogen, wobei die Fertigung (nicht dargestellt) in folgenden Schritten erfolgt:
Einzelne Spulen Stränge (20) werden auf Schablonen gewickelt. Die fertig gewickelten Spulen werden dann nach dem Entfernen der Schablone gemeinsam in die isolierten Nuten (13) des Statorkernes (10) eingezogen. Im eingezogenen Zustand ragt ein Teil der Wicklungsstränge (20) oben und unten als Wickelkopf (21, 22) aus den Nuten (13). Die Drahtanfänge und Drahtenden der Spulen verlassen als Anschlussenden (23, 24, 25) die Nuten (13) im obenliegenden Wickelkopf (21) je nach Spulenlage im Bereich des Nutgrundes (14), der Nutmitte (15) oder der Nutöffnung (16). Nach dem Einziehen erfolgt dann mit einem Haken eine manuelle Positionierung der Anschlussenden (23, 24, 25) in den Nutgrund (14). Nach einer Übergabe der Enden (23, 24, 25) in eine später beschrieben Verleghilfe (101) (s. Figur 1a) erfolgt dann eine maschinelle Verlegung zu ebenfalls später beschriebenen Kontaktiereinrichtungen.

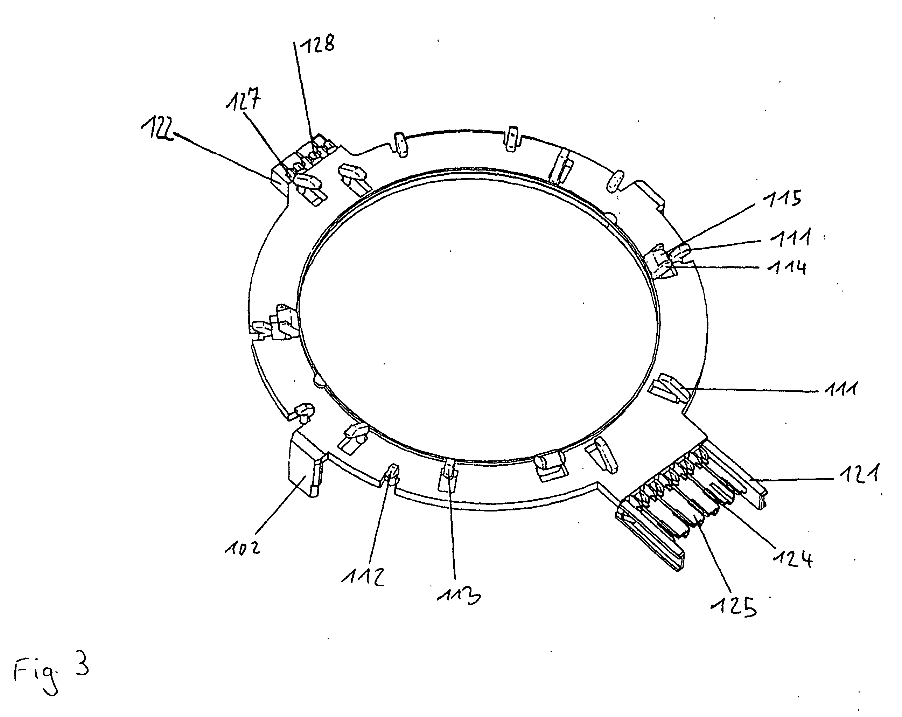

Am Statorkern (10) ist ein multifunktionales Bauteil, ein in den Figuren 1e und 1f und in einem anderen Ausführungsbeispiel in Figur 3 dargestellter Verschaltungsträger (100) durch Schwalbenschwanzverbindungen (102) fixiert. Er ist als einstückiges Kunststoffspritzteil ausgebildet und besteht aus folgenden Einzelelementen:

Eine im wesentlichen kreisringförmige Verlegeplatte (110) bedeckt die obere Stirnseite (18) des Statorkernes (10) und dient zur berührungsfreien Verlegung der Anschlussenden (23, 24, 25). An die Platte (110) sind Haken (111, 112, 113) angeformt, mit denen die Anschlussenden aus den Nutgründen heraus in konzentrische Bahnen bis zu Kontaktiereinrichtungen umgelenkt werden. Radial nach außen gerichtete Haken (113) zur Halterung der inneren Enden (25) sind höher als radial nach außen gerichtete Haken (112) zur Verlegung der äußeren Enden (24) ausgebildet, so dass die Enden (24, 25) lediglich in einer vorgegebenen Höhe in Richtung des oberen Wickelkopfs (21) bewegt werden müssen und dann automatisch von den richtigen Haken (112, 113) ergriffen werden. An Kreuzungspunkten ist zwischen zwei Haken (114) ein Steg (115) angeordnet, der ein äußeres Anschlussende (24) über ein inneres Ende (25) hinwegführt und einen definierten Abstand der beiden Enden (24, 25) in diesem Bereich gewährleistet (s. Figur 2d). Außerdem sind an die Verlegeplatte (110) zwei Abstützungen (116) und zwei Haken (117) als Halteelemente für einen Thermoschalter (30) angeformt. Der auf der Platte (110) vorfixierte Thermoschalter (30) wird durch einen abschließenden automatischen Nähvorgang mit dem Wickelkopf (21) in eine innige und wärmeleitende Verbindung gebracht. Um die Durchführung der Nadel (nicht dargestellt) durch die Zwischenräume der Wicklungsstränge (20) über den Zähnen (11) zu ermöglichen, ist der Thermoschalter (30) mit Abstand zur Verlegeplatte (110) in den Halteelementen (116, 117) fixiert. Zusätzlich sind diese und die Haken (111, 112, 113, 114) radial direkt hinter den Statornuten (13) angeordnet, so dass die Zwischenräume freiliegen.

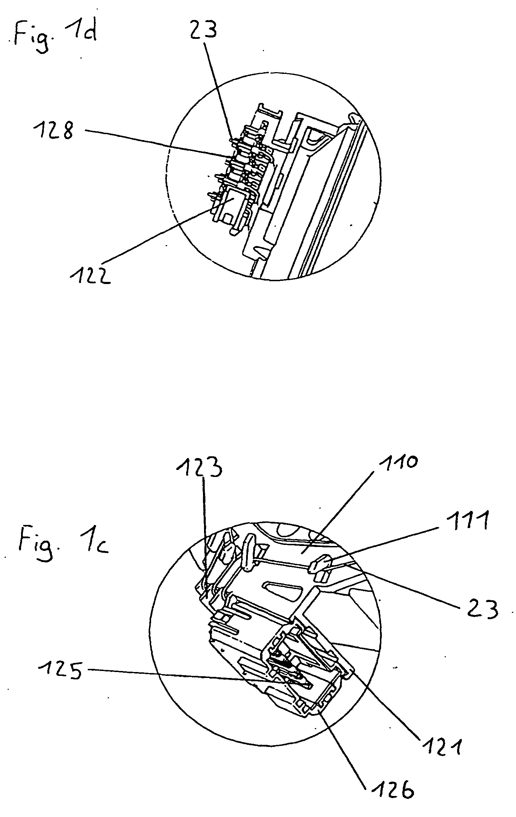

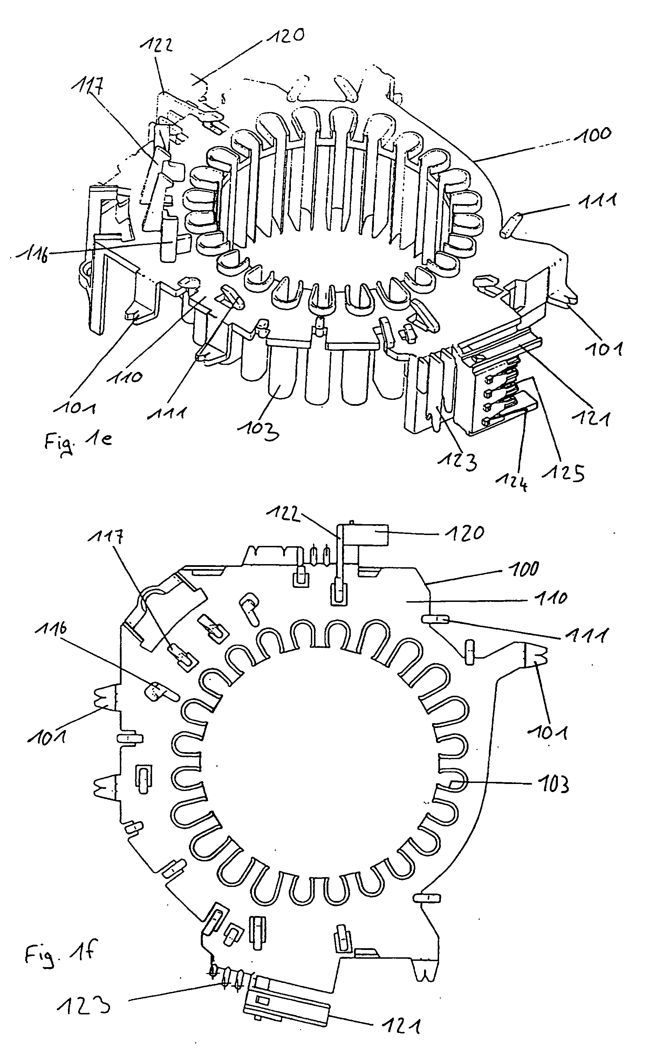

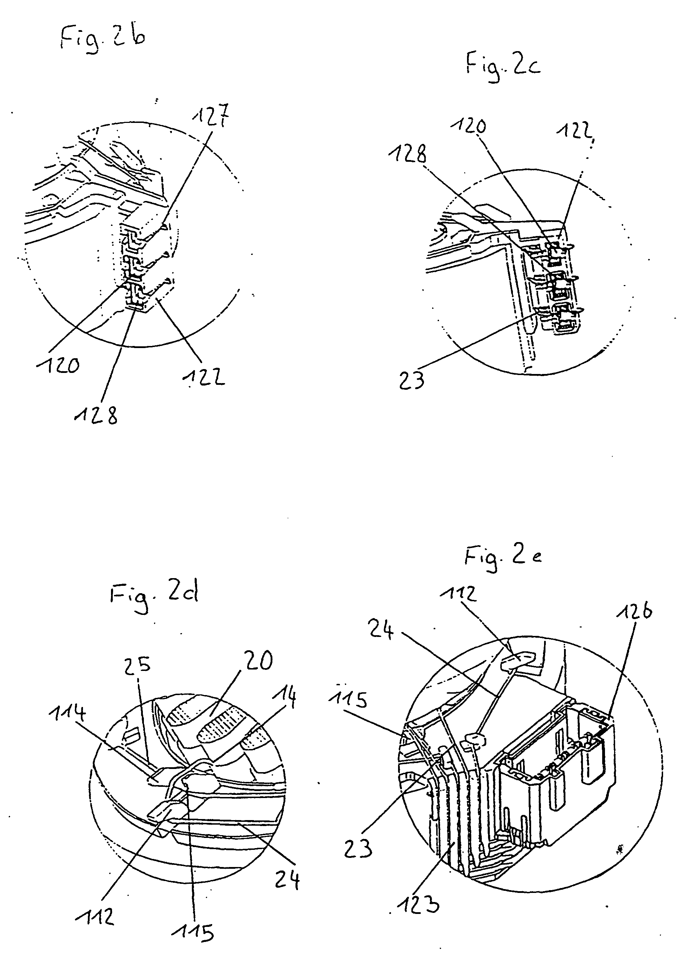

An die Verlegeplatte (110) sind zur Aufnahme von Kontaktiereinrichtungen (Kontakten 125, 128) Kontaktkammern (120) angeformt und zu zwei Steckbereichen zusammengefasst. Der erste Steckbereich ist als Steckersockel (121) zur Herstellung des externen Motorstromanschlusses ausgebildet. Der zweite Steckbereich (122) wird zur Herstellung der internen elektrischen Verbindungen der einzelnen Wicklungsstränge (20) verwendet. Beide Steckbereiche (121, 122) sind gegenüberliegend an die Verlegeplatte angeformt und stützen sich am Umfang (19) des Statorkernes (10) ab, wobei sich die Kontaktkammern (120) in axialer (s. Figur 2e), radialer (s. Figur 3) oder tangentialer (s. Figur 1c,d) Steckrichtung erstrecken. Der obere Rand der Steckbereiche (121, 122) liegt unterhalb oder in der Grundfläche der Verlegeplatte (110) und erleichtert so die Durchführung der Nadel beim abschließenden automatischen Nähvorgang. Die Anschlussenden (23, 24, 25) zur Herstellung des externen Motorstromanschlusses werden über weitere Umlenk- und Führungselemente (123), welche am Umfang (19) des Statorkernes (1) anliegen und auch an die Verlegeplatte (110) angeformt sind, in Schlitze (124) in den einzelnen Kontaktkammern (120) im Steckersockel (121) eingelegt und anschließend durch Einschieben von Einzelkontakten (125) mittels Schneid-Klemmtechnik mit diesen verbunden. Zur Schwingungsberuhigung der Drähte und Kontaktstellen während des Motorbetriebs wird ein Steckerrahmen (126) mit dem Steckersockel (121) verrastet. Im zweiten Steckbereich (122) werden die Anschlussenden (23, 24, 25) ebenfalls in Schlitze (127) der einzelnen Kontaktkammern (120) eingelegt und durch einen zusammenhängenden Kontakt (128) mittels Schneid-Klemmtechnik miteinander verbunden (s. Figur 2b,c).

Um die vorbeschriebene Kontaktierung automatisieren zu können, müssen die Anschlussenden (23, 24, 25) von einem Roboter an definierten Punkten ergriffen werden. Hierzu sind an die Verlegeplatte (110) Verleghilfen (101) zur vorübergehenden Aufnahme der Anschlussenden (23, 24, 25) angeformt.

Außerdem sind in den Verschaltungsträger (100) die Isolierungen (103) der Statornuten (13) integriert und Befestigungsstege (104) und Befestigungsösen zum lagerichtigen Einsatz des Stators in einen Motorlagerschild (nicht dargestellt).

## Patentansprüche

1. Stator für Elektromotoren, insbesondere für Asynchronmotoren, bei dem eine aus mehreren Wicklungssträngen (20) bestehende Statorwicklung in die Statornuten (13) eines Statorkernes (10) eingezogen ist, und bei dem die nutverlassenden Drahtanfänge und - enden (23, 24, 25) der Wicklungsstränge (20) direkt über einen am Stator angeordneten Verschaltungsträger (100) an mindestens eine am Statorkern (10) befestigte Kontaktiereinrichtung (120) geführt und mit dieser verbunden sind, wobei der Verschaltungsträger (100) eine auf dem Statorkern (10) angeordnete, im wesentlichen kreisförmige Verlegeplatte (110) mit Umlenkelementen oder Führungselementen beinhaltet,
**dadurch gekennzeichnet,**
**dass** alle Anschlussenden (23, 24, 25) die Statornuten (13) am Nutgrund (14) verlassen, und dass die Umlenkelemente oder Führungselemente als Haken (111, 112, 113) oder als zwischen zwei Haken (114) angeordnete Stege (115) ausgebildet sind, und dass der Verschaltungsträger zur berührungsfreien Führung der Anschlussenden (23, 24, 25) zu der (den) Kontaktiereinrichtung(en) (125; 128) ausgebildet ist.

2. Elektromotor nach Anspruch 1,
**dadurch gekennzeichnet,**
**dass** Umlenkelemente als aus der Verlegeplatte herausragende Haken (111, 112, 113, 114) ausgebildet sind, welche eine konzentrische Verlegung der Anschlussenden (23, 24, 25) ermöglichen.

3. Elektromotor nach Anspruch 2,
**dadurch gekennzeichnet,**
**dass** radial nach außen gerichtete Haken (113) zur Halterung der inneren Anschlussenden (25) höher als nach außen gerichtete Haken (112) zur Verlegung der äußeren Anschlussenden (24) ausgebildet sind.

4. Elektromotor nach einem der Ansprüche 2 oder 3,
**dadurch gekennzeichnet,**
**dass** die Haken (111, 112, 113, 114) in radialer Richtung derart hinter den Statornuten (13) angeordnet sind, dass die Zwischenräume zwischen den Wicklungssträngen (20) freiliegend sind.

5. Elektromotor nach mindestens einem der Ansprüche 1 bis 4,
**dadurch gekennzeichnet,**
**dass** der Verschaltungsträger (100) an die Verlegeplatte (110) angeformte Kontaktkammern (120) beinhaltet, die zu mindestens einem Steckbereich zusammengefasst sind.

6. Elektromotor nach Anspruch 5,
**dadurch gekennzeichnet**
**dass** der erste Steckbereich als Steckersockel (121) zur Herstellung des externen Motorstromanschlusses ausgebildet ist.

7. Elektromotor nach einem der Ansprüche 5 oder 6,
**dadurch gekennzeichnet,**
**dass** ein zweiter Steckbereich (122) zur Herstellung der internen elektrischen Verbindungen der einzelnen Wicklungsstränge (20) verwendet wird.

8. Elektromotor nach den Ansprüchen 6 und 7,
**dadurch gekennzeichnet,**
**dass** die beiden Steckbereiche (121, 122) gegenüberliegend auf der Verlegeplatte (110) angeordnet sind.

9. Elektromotor nach mindestens einem der Ansprüche 5 bis 8,
**dadurch gekennzeichnet,**
**dass** der (die) Steckbereich(e) (121, 122) sich am Umfang (19) des Statorkernes (10) abstützt(en), wobei sich die Kontaktkammern (120) in axialer, radialer oder tangentialer Steckrichtung erstrecken.

10. Elektromotor nach Anspruch 9,
**dadurch gekennzeichnet,**
**dass** der obere Rand der (des) Steckbereiche(s) (121, 122) unterhalb oder in der Grundfläche der Verlegeplatte (110) liegt.

11. Elektromotor nach mindestens einem der Ansprüche 1 bis 10,
**dadurch gekennzeichnet,**
**dass** der Verschaltungsträger (100) an die Verlegeplatte (110) angeformte weitere Umlenk- und Führungselemente (123) beinhaltet, welche am Umfang (19) des Statorkernes (10) anliegen.

12. Elektromotor nach mindestens einem der Ansprüche 1 bis 11,
**dadurch gekennzeichnet,**
**dass** der Verschaltungsträger (100) an die Verlegeplatte (110) angeformte Halteelemente (116, 117) für Elektro-Bauelemente (30) beinhaltet.

13. Elektromotor nach mindestens einem der Ansprüche 1 bis 12,
**dadurch gekennzeichnet,**
**dass** der Verschaltungsträger (100) an die Verlegeplatte(110) angeformte Verleghilfen (101) zur vorübergehenden Aufnahme der Anschlussenden (23, 24, 25) beinhaltet.

14. Elektromotor nach mindestens einem der Ansprüche 1 bis 13,
**gekennzeichnet durch** an der Verlegeplatte (100) angeformte Isolierungen (103) der Statornuten.

15. Elektromotor nach mindestens einem der Ansprüche 1 bis 14,
**gekennzeichnet durch** an die Verlegeplatte (100) angeformte Fixierhilfen (104, 105) zum lagerichtigen Einsatz des Stators in einen Motorlagerschild.

16. Elektromotor nach mindestens einem der Ansprüche 1 bis 15,
**dadurch gekennzeichnet,**
**dass** elektrische Verbindung zwischen den Anschlussenden (23, 24, 25) und der Kontaktiereinrichtung (125, 128) durch Schneid-Klemmtechnik erfolgt.

## Claims

1. Stator for electric motors, more especially for asynchronous motors, where a stator winding comprising a plurality of winding phases is inserted into the stator slots (13) of a stator core (10), and where the beginnings and ends of the wires (23, 24, 25) of the winding phases (20) leaving the slot are guided directly via a circuit carrier (100) disposed on the stator to at least one contact device (120) secured to the stator core (10) and are connected to said contact device, wherein the circuit carrier (100) includes one installation plate (110) with turning elements or guiding elements, said installation plate being disposed on the stator core (9) and being substantially circular, **characterised in that** all the connection ends (23, 24, 25) leave the stator slots (13) at the bottom of the slot (14), and **in that** the turning elements or guiding elements are in the form of hooks (111, 112, 113) or in the form of webs (115) disposed between two hooks (114), and **in that** the circuit carrier is configured so that the connection ends (23, 24, 25) are guided in a contact-free manner to the contact device (devices) (125; 128).

2. Electric motor according to claim 1, **characterised in that** turning elements are in the form of hooks (111, 112, 113) which protrude from the installation plate and make it possible for the connection ends (23, 24, 25) to be laid in a concentric manner.

3. Electric motor according to claim 2, **characterised in that** hooks (113) aligned radially outwards to hold the inner connection ends (25) are configured higher than hooks (112) aligned outwards for laying the outer connection ends (24).

4. Electric motor according to one of claims 2 or 3, **characterised in that** the hooks (111, 112, 113, 114) are disposed in the radial direction in such a manner behind the stator slots (13), that the intermediate spaces between the winding phases (20) are exposed.

5. Electric motor according to at least one of claims 1 to 4, **characterised in that** the circuit carrier (100) includes contact clamps (12) which are integrally formed on the installation plate (11) and are combined to form at least one plug-in region.

6. Electric motor according to claim 5, **characterised in that** the first plug-in region is in the form of a plug-in base (121) for producing the external supply points for the motor.

7. Electric motor according to one of claims 5 or 6, **characterised in that** a second plug-in region (122) is used for producing the internal electric connections of the individual winding phases (20).

8. Electric motor according to claims 6 and 7, **characterised in that** the two plug-in regions (121, 122) are disposed situated opposite from one another on the installation plate (110).

9. Electric motor according to at least one of claims 5 to 8, **characterised in that** the plug-in region (regions) (121, 122) are supported on the circumference (19) of the stator core (10), wherein the contact clamps (120) extend in the axial, radial or tangential plug-in direction.

10. Electric motor according to claim 9, **characterised in that** the upper edge of the plug-in region (regions) (121, 122) is underneath or in the base of the installation plate (110).

11. Electric motor according to at least one of claims 1 to 10, **characterised in that** the circuit carrier (100) includes additional turning elements and guiding elements which are integrally formed on the installation plate (110) and abut against the circumference (19) of the stator core (10).

12. Electric motor according to at least one of claims 1 to 11, **characterised in that** the circuit carrier (100) includes retaining elements (116, 117) for electric components (30), said retaining elements being integrally formed on the installation plate (110).

13. Electric motor according to at least one of claims 1 to 12, **characterised in that** the circuit carrier (100) includes installation aids integrally formed on the installation plate (110) for the temporary receiving of the connection ends (23, 24, 25).

14. Electric motor according to at least one of claims 1 to 13, **characterised by** insulating means (103) of the stator slots integrally formed on the installation plate (100).

15. Electric motor according to at least one of claims 1 to 14, **characterised by** securing aids (104, 105) integrally formed on the installation plate (100) to ensure the stator is inserted into a motor end housing in the correct position.

16. Electric motor according to at least one of claims 1 to 15, **characterised in that** the electric connection between the connection ends (23, 24, 25) and the contact device (125, 128) is effected by means of the insulation displacement connection (IDC) method of termination.

## Revendications

1. Stator pour moteurs électriques, en particulier pour moteurs asynchrones, dans lequel un enroulement statorique composé de plusieurs phases d'enroulement (20) est passé dans les encoches de stator (13) d'un noyau de stator (10), et dans lequel les commencements et les extrémités de fil (23, 24, 25) des phases d'enroulement (20) quittant les encoches sont directement menés par un support de câblage (100) à au moins un dispositif de connexion (120) fixé sur le noyau de stator (10) et reliés à celui-ci, le support de câblage (100) contenant une plaque de pose (110) disposée sur le noyau de stator (10), essentiellement circulaire, comportant des éléments de renvoi ou des éléments de guidage,
**caractérisé par le fait**
**que** toutes les extrémités de raccordement (23, 24, 25) quittent les encoches de stator (13) à la base de l'encoche (14), et que les éléments de renvoi ou éléments de guidage sont formés comme des crochets (111, 112, 113) ou comme des ponts (115) disposés entre deux crochets (114), et que le support de câblage est conçu pour guider sans contact les extrémités de raccordement (23, 24, 25) vers le(s) dispositif(s) de connexion (125 ; 128).

2. Moteur électrique selon la revendication 1,
**caractérisé par le fait**
**que** des éléments de renvoi sont formés comme des crochets (111, 112, 113, 114) faisant saillie de la plaque de pose, lesquels permettent une pose concentrique des extrémités de raccordement (23, 24, 25).

3. Moteur électrique selon la revendication 2,
**caractérisé par le fait**
**que** des crochets (113) dirigés radialement vers l'extérieur destinés à la fixation des extrémités de raccordement intérieures (25) sont formés plus haut que des crochets (112) dirigés vers l'extérieur destinés à la pose des extrémités de raccordement extérieures (24).

4. Moteur électrique selon l'une des revendications 2 ou 3,
**caractérisé par le fait**
**que** les crochets (111, 112, 113, 114) sont disposés en direction radiale derrière les encoches de stator (13) de telle manière que les espaces entre les phases d'enroulement (20) sont dégagés.

5. Moteur électrique selon au moins l'une des revendications 1 à 4,
**caractérisé par le fait**
**que** le support de câblage (100) contient des chambres de contact (120) formées sur la plaque de pose (110) qui sont regroupées en au moins une zone d'enfichage.

6. Moteur électrique selon la revendication 5,
**caractérisé par le fait**
**que** la première zone d'enfichage est formée comme un socle de fiche (121) pour l'établissement du raccordement de courant de moteur.exteme.

7. Moteur électrique selon l'une des revendications 5 ou 6,
**caractérisé par le fait**
**que** l'on utilise une deuxième zone d'enfichage (122) pour l'établissement des connexions électriques internes des différentes phases d'enroulement (20).

8. Moteur électrique selon les revendications 6 et 7,
**caractérisé par le fait**
**que** les deux zones d'enfichage (121, 122) sont disposées à l'opposé l'une de l'autre sur la plaque de pose (110).

9. Moteur électrique selon au moins l'une des revendications 5 à 8,
**caractérisé par le fait**
**que** la ou les zone(s) d'enfichage (121, 122) s'appuie(nt) sur la circonférence (19) du noyau de stator (10), les chambres de contact (120) s'étendant en direction d'enfichage axiale, radiale ou tangentielle.

10. Moteur électrique selon la revendication 9,
**caractérisé par le fait**
**que** le bord supérieur de la ou des zone(s) d'enfichage (121, 122) se situe au-dessous ou dans la surface de base de la plaque de pose (110).

11. Moteur électrique selon au moins l'une des revendications 1 à 10,
**caractérisé par le fait**
**que** le support de câblage (100) contient d'autres éléments de renvoi et de guidage (123) formés sur la plaque de pose (110), lesquels s'appuient sur la circonférence (19) du noyau de stator (10).

12. Moteur électrique selon au moins l'une des revendications 1 à 11,
**caractérisé par le fait**
**que** le support de câblage (100) contient des éléments de fixation (116, 117) formés sur la plaque de pose (110) pour des composants électriques (30).

13. Moteur électrique selon au moins l'une des revendications 1 à 12,
**caractérisé par le fait**
**que** le support de câblage (100) contient des aides à la pose (101) formées sur la plaque de pose (110) pour recevoir provisoirement les extrémités de raccordement (23, 24, 25).

14. Moteur électrique selon au moins l'une des revendications 1 à 13,
**caractérisé par** des isolations (103) formées sur la plaque de pose (110) pour les encoches de stator.

15. Moteur électrique selon au moins l'une des revendications 1 à 14,
**caractérisé par** des aides à la fixation (104, 105) formées sur la plaque de pose (110) pour la mise en place correcte du stator dans un flasque de moteur.

16. Moteur électrique selon au moins l'une des revendications 1 à 15,
**caractérisé par le fait**
**que** la liaison électrique entre les extrémités de raccordement (23, 24, 25) et le dispositif de connexion (125, 128) est réalisée par technique de déplacement d'isolant.
